# EUROPEAN PATENT SPECIFICATION

(11) **EP 3 520 470 B1**
(45) Date of publication and mention of the grant of the patent: **02.07.2025**
(21) Application number: 17856936.4
(22) Date of filing: 02.03.2017
(51) Int. Cl.: H04W 28/02, H04W 28/08

(54) **PDCP, RLC HANDLING IN DC SPLIT BEARER**
PDCP, RLC-HANDHABUNG IN EINEM GETEILTEN DC-TRÄGER
PROTOCOLE PDCP, TRAITEMENT DE COMMANDE DE LIAISON RADIO DANS UN SUPPORT RÉPARTI À DOUBLE CONNECTIVITÉ

(30) Priority: 30.09.2016 US 201662402978 P
(43) Date of publication of application: 07.08.2019
(73) Proprietor: Apple Inc., Cupertino, CA 95014 (US)
(72) Inventor: HAN, Jaemin, Hillsboro, Oregon 97124 (US); YIU, Candy, Portland, Oregon 97201 (US); PALAT, Sudeep K., Cheltenham Gloucestershire GL51 0GG (GB); HEO, Youn Hyoung, Seoul 11 150-705 (KR); PHUYAL, Umesh, San Diego, California 92128 (US); JEONG, Kyeongin, Youngin-si 446-707 (KR); ZHANG, Yujian, Beijing 100081 (CN)
(74) Representative: Lang, Johannes
(86) International application number: PCT/US2017/020418
(87) International publication number: WO 2018/063435

(56) References cited:
- WO-A1-2015/115854
- WO-A1-2015/133767
- WO-A1-2015/174658
- US-A1- 2016 065 700
- US-A1- 2016 119 826
- LG ELECTRONICS INC: "PDCP reordering enhancement", vol. RAN WG2, no. Beijing, China; 20150824 - 20150828, 23 August 2015 (2015-08-23), XP051040202, Retrieved from the Internet <URL:http://www.3gpp.org/ftp/Meetings_3GPP_SYNC/RAN2/Docs/> [retrieved on 20150823]
- ERICSSON: "PDCP reordering for split bearers", vol. RAN WG2, no. Prague, Czech Republic; 20140210 - 20140214, 1 February 2014 (2014-02-01), XP050754449, Retrieved from the Internet <URL:http://www.3gpp.org/ftp/tsg_ran/WG2_RL2/TSGR2_85/Docs/> [retrieved on 20140201]
- BROADCOM CORPORATION: "PDCP re-ordering with split bearers", R2-140355, 3GPP TSG-RAN WG2 MEETING #85, 31 January 2014 (2014-01-31), Prague, Czech Republic, pages 2 - 3, XP050737568, Retrieved from the Internet <URL:http://www.3gpp.org/ftp/tsg_ran/WG2_RL2/TSGR2_85/docs>
- ERICSSON: "PDCP re-ordering for split bearers", R2-140661, 3GPP TSG-RAN WG2 MEETING #85, 1 February 2014 (2014-02-01), Prague, Czech Republic, XP050754449, Retrieved from the Internet <URL:http://www.3gpp.org/ftp/tsg_ran/WG2_RL2/TSGR2_85/docs>

## Description

### TECHNICAL FIELD

The application relates to PDCP and RLC handling in DC split bearer with Long Term Evolution (LTE) or new radio (NR) which is also termed Fifth Generation (5G) in this application.

### BACKGROUND

The SG framework, which targets 10+ gigabits per second (Gbps) data rate support, aims to provide reliable and continuous connectivity to a User Equipment (UE) through densified network nodes. Dual Connectivity (DC) is expected to play a role in 5G, as it can provide service continuity through radio bearers that use resources of two different network nodes (e.g., 5G and Long Term Evolution (LTE)) simultaneously. Thus, techniques for Packet Data Convergence Protocol (PDCP) and Radio Link Control (RLC) handling in DC split bearer in new radio (NR) blockage may be desirable.
WO 2015/174658 A1 discloses a method and a device for re-ordering a PDCP PDU in a dual connectivity system, and particularly re-ordering of packets received by RLC devices.

### SUMMARY OF INVENTION

The invention is defined by the appended claims. The dependent claims define advantageous embodiments.

### BRIEF DESCRIPTION OF THE DRAWINGS

FIG. 1A illustrates an example Dual Connectivity (DC) bearer in the downlink direction, in accordance with some embodiments.
FIG. 1B illustrates an example split bearer, in accordance with some embodiments.
FIGS. 2A-2C illustrate examples of past Hyper Frame Number (HFN) duplicate delivery, in accordance with some embodiments.
FIGS. 3A-3C illustrate example DC split bearers for 5G millimeter wave (mmWave) and Long Term Evolution (LTE) nodes, in accordance with some embodiments.
FIG. 4 is a graph illustrating an example Transport Control Protocol (TCP) throughput performance comparison, in accordance with some embodiments.
FIGS. 5A-5B illustrate example COUNT formats, in accordance with some embodiments.
FIG. 6 is a functional diagram of a wireless network in accordance with some embodiments.
FIG. 7 illustrates components of a communication device in accordance with some embodiments.
FIG. 8 illustrates a block diagram of a communication device in accordance with some embodiments.
FIG. 9 illustrates another block diagram of a communication device in accordance with some embodiments.

### DETAILED DESCRIPTION

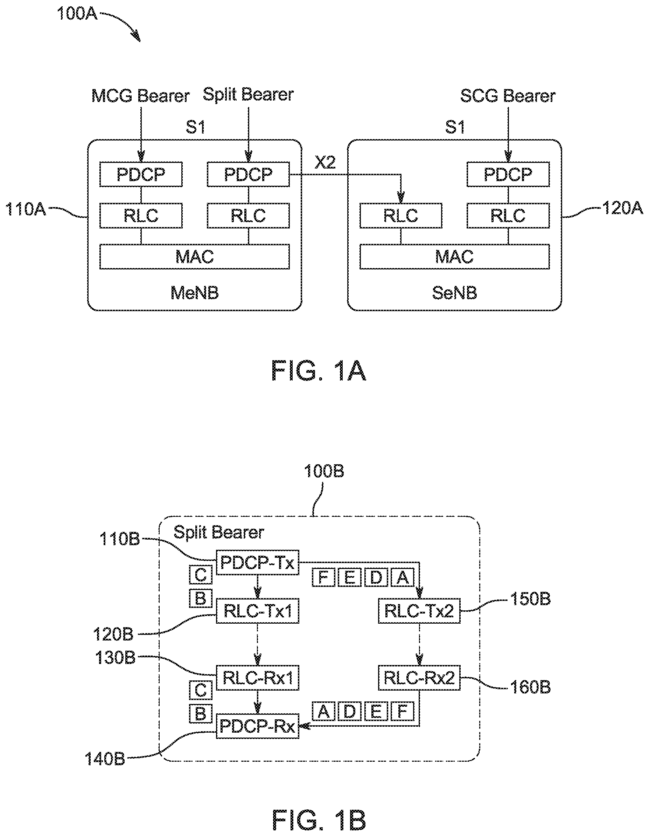

FIG. 1A illustrates an example Dual Connectivity (DC) bearer 100A in the downlink direction, in accordance with some embodiments. As shown in FIG. 1, the DC bearer 100A includes a Master evolved NodeB (MeNB) 110A and a Secondary evolved NodeB (SeNB) 120A. Input at the MeNB 110A is received via Master Cell Group (MCG) bearer and via a split bearer at S1, and passes through the Packet Data Convergence Protocol (PDCP) and Radio Link Control (RLC) layers to the Media Access Control (MAC) layer. The PDCP of the split bearer of the MeNB 110A is connected to the RLC of the SeNB 120A via X2. In addition, the SeNB 120A connects to the Secondary Cell Group (SCG) bearer of S1 at the PDCP layer, which is above the RLC layer, which is above the MAC layer.

FIG. 1B illustrates an example split bearer 100B, in accordance with some embodiments. As shown, the split bearer 100B includes a PDCP transmit (PDCP-Tx) 110B and a PDCP receive (PDCP-Rx) 140B. There are two paths (numbered 1 and 2 from the PDCP-Tx to the PDCP-Rx. Path number 1 includes RLC-Tx1 120B and RLC-Rx1 130B. Path number 2 include RLC-Tx2 150B and RLC-Rx2 160B. As shown, blocks B and C are transmitted via path number 1 and blocks A, D, E, and F are transmitted via path number 2. The blocks are shown at the transmitting side and receiving side simultaneously just for path illustration purpose.

The 5G framework, which targets 10+ Gbps data rate support, aims to provide reliable and continuous connectivity to a UE through densified network nodes. Dual Connectivity (DC) is expected to play a role in 5G, as it can provide service continuity through radio bearers that use resources of two different network nodes (e.g., 5G and Long Term Evolution (LTE)) simultaneously. Thus, techniques for Packet Data Convergence Protocol (PDCP) and Radio Link Control (RLC) handling in DC split bearer in new radio (NR) blockage may be desirable. In accordance with the subject technology, one protocol architecture for LTE New Radio (LTE-NR) inter-working is the DC split bearer, whose radio protocols are located in two separate network nodes (MeNB 110A and SeNB 120A) as shown in FIG. 1A.

For the split bearer, one PDCP entity located in the MeNB 110A is working together with two RLC Acknowledge Mode (AM) entities (each located in the MeNV 110A and SeNB 120A, respectively). This provides two separate RLC paths for a single PDCP transmission (e.g., as illustrated in FIG. 1B). As routing is performed in the transmitting PDCP entity (e.g., PDCP-Tx 110B) PDCP Protocol Data Units (PDUs) encapsulating upper layer packets (e.g., Transport Control Protocol (TCP)/ Internet Protocol (IP) datagrams) may be continuously delivered even if one RLC path suffers from poor radio qualities. PDCP provides a number of functionalities, such as retransmission based on status reporting, Hyper Frame Number (HFN) synchronization for COUNT maintenance, timer-based discard (e.g., PDCP discard timer), and duplicate discharging, etc. Due to two RLC entities being involved, additional functionalities may be further standardized as described herein.

Aspects of the subject technology provide for PDCP reordering. Although each RLC (RLC AM) guarantees in-sequence packet delivery to the receiving PDCP entity through each path, PDCP reordering at the receiving PDCP entity (e.g., PDPC-Rx 140B) may be implemented due to (a) routing performed at the transmitting PDCP entity, and (b) distinct packet delivery behavior on each RLC path as associated with different physical radio interfaces. For PDCP reordering, the RLC Unacknowledged Mode (UM) like reordering technique is implemented with the size of the reordering window being equal to half of the PDCP Sequence Number (SN) space.

Aspects of the subject technology provide for more than half of the PDCP SN space not being in flight. In most cases, half of the PDCP SN space is for the reordering window size. Thus, associating more than half of the PDCP SN space of contiguous PDCP Service Data Units (SDUs) with SNs at the transmitting PDCP entity may cause an HFN desynchronization problem. The HFN value is maintained by both the transmitting PDCP entity and the receiving PDCP entity but separately counted through each transmitted and received PDCP PDU. Thus, more than half of the PDCP SN space not being in flight reduces HFN desynchronization.

In one implementation, a buffer management is used based on the successful delivery indications from the transmitting RLC entity and/or the PDCP status reporting from the receiving PDCP entity. Whenever an upper layer packet (e.g., PDCP SDU) is available to transmit while maintaining more than half of the PDCP SN space not being in flight, the transmitting PDCP entity encapsulates the upper layer packet into a PDCP PDU, submits the PDCP PDU to the RLC layer, and stores the PDCP PDU in the buffer. When the successful delivery of the PDCP PDU has been confirmed by the transmitting RLC entity or by the PDCP status reporting from the receiving PDCP entity, the transmitting PDCP entity removes the PDCP PDU from the buffer. As a result, checking the buffer enables the transmitting PDCP entity to track how many PDCP PDUs (and associated SNs) are currently in flight but not yet confirmed delivered to the receiving PDCP entity. By checking the buffer before associating a new SN to a PDCP SDU, the transmitting PDCP entity can ensure that not more than half of the PDCP SN space is in flight.

PDCP is expected to ensure that the upper layer receives upper layer PDUs only once, while both the transmitting and receiving PDCP entities are HFN synchronized. However, the "Past HFN Duplicate Delivery" problem, described in detail below, may arise at the PDCP layer. This may degrade the performance of some upper layer protocols, especially those that provide in-sequence delivery (e.g., TCP).

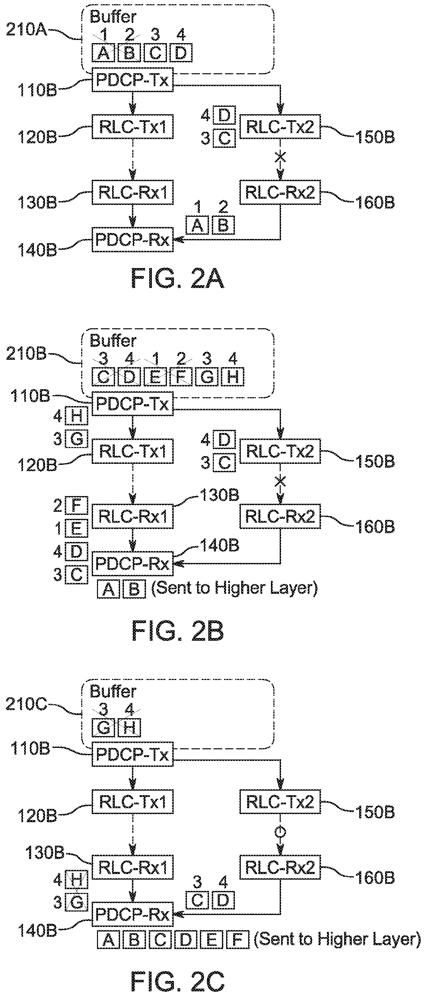

The past HFN duplicate delivery problem is discussed below. FIGS. 2A-2C illustrate examples of past Hyper Frame Number (HFN) duplicate delivery, in accordance with some embodiments. As shown, each of the FIGS. 2A-2C includes the components 110B-160B of the split bearer 100B of FIG. 1B. FIG. 2B follows FIG. 2A in time, and FIG. 2C follows FIG. 2B in time. In other words, the buffers 210A, 210B, and 210C represent the same buffer at different points in time.

FIGS. 2A-2C are discussed below in conjunction with a 2-bit PDCP SN space (PDCP reordering window size = 2). In order to ensure that not more than half of the PDCP SN space is in flight, the PDCP-Tx 110B does not associate with more than two contiguous PDCP SDUs with SNs when transmitting.

In FIG. 2A, two PDCP PDUs A and B (at SNs 1 and 2, respectively) are already delivered to PDCP-Rx 140B through the RLC path 2 (RLC-Tx2 150B and RLC-Rx2 160B). By the RLC's successful delivery indication from RLC-Tx2 150B (by RLC status PDU from RLC-Rx2 160B), the PDUs A and B can be removed from the buffer 210A, and thus the PDCP-Tx 110B can send two more PDUs (which are C and D). Their route is again the RLC path 2 (RLC-Tx2 150B and RLC-Rx2 160B). However, suppose the link of RLC path 2 may start to suffer. As the PDUs C and D are not delivered yet, there is no corresponding RLC's successful delivery indications for the PDUs C and D, and thus they remain in the buffer 210A of PDCP-Tx 110B.

As shown in FIG. 2B, the PDCP-Tx 110B changes the route and sends the PDUs C and D stored in its buffer through the RLC path 1, which includes RLC-Tx1 120B and RLC-Rx1 130B (PDCP retransmission). Once the PDUs C and D are delivered, the PDUs C and D are removed from the buffer 210B in response to an RLC indication. The PDCP-Tx 110B sends the subsequent PDUs E and F (with HFN value increased) via RLC path 1 (RLC-Tx1 120B and RLC-Rx1 130B). Once E and F are delivered and the delivery is confirmed by RLC indication, the PDCP-Tx 110B sends the PDUs G and H via RLC path 1 (RLC-Tx1 120B and RLC-Rx1 130B). During the delivery of PDUs C, D, E, and F, the radio link of the RLC path 2 (RLC-Tx2 150B and RLC-Rx2 160B) continues to suffer from poor connectivity.

However, as shown in FIG. 2C, right before PDUs G and H arrive through RLC path 1 (RLC-Tx1 120B and RLC-Rx1 130B), the RLC link of RLC path 2 (RLC-Tx2 150B and RLC-Rx2 160B) recovers and PDUs C and D (which were submitted to RLC-Tx2 150B earlier) are delivered to PDCP-Rx 160B due to the retransmissions of RLC-Tx2 150B. The PDCP-Rx 140B reordering operates based on SNs. Thus, the PDUs G and H (whose SNs are the same as those of the PDUs C and D, respectively) are dropped due to the out-of-window reception discarding. Moreover, due to the RLC indication from the RLC path 2 via RLC-Tx2 150B and RLC-Rx2 160B (as PDUs C and D with SN 3 and 4, respectively, are correctly received at the RLC-Rx2 160B) or the RLC path 1 via RLC-Tx1 120B and RLC-Rx1 130B (as PDUs G and H with SN 3 and 4, respectively, are correctly received at the RLC-Rx1 130B, the RLC-Tx1 120B believe that they are correctly received and, thus, do not retransmit them), the PDUs G and H with SN 3 and 4, respectively, are removed from the buffer 210C of the PDCP-Tx 110B. Note that the RLC indication to PDPC is based on SN.

In the example of FIGS. 2A-2C, PDCP delivers to the upper layer the PDUs A, B, C, D, E, and F sequentially but delivers the PDUs C and D again after PDU F. The desired PDUs G and H are dropped at the PDCP-Rx 140B due to the duplicated PDUs C and D (after PDU F) which have the same SNs but with the past HFN value. Since the deciphering at the PDCP-Rx 140B is based on the COUNT value (a disjoint union of the current HFN and the SN of the received PDU), the data parts of the duplicated PDCP PDUs C and D, when deciphered, would be completely unrelated to the data parts of the PDCP PDUs C and D that were delivered earlier. Therefore, the upper layer TCP may not comprehend the data parts of the duplicated PDCP PDUs C and D. The upper layer TCP may have to discard the data parts of the duplicated PDUs C and D and have to request the retransmissions of the desired data parts of the PDUs G and H. In fact, there is no other way to resend the desired data parts of the PDUs G and H without involving TCP as such PDUs G and H no longer exist in the PDCP-Tx/Rx entities 110B and 140B. As a result, additional TCP delay is inevitable.

Causes of this problem include (a) PDCP PDUs, when a route is switched, remained at the RLC-Tx of the original path; and (b) the PDCP reordering function which operates purely based on SNs (not based on HFN due to the security protection of the COUNT value). When the route is changed, the PDCP-Tx 110B resends the remaining PDUs (at the RLC-Tx of the original path) over the switched route. This means that those remaining PDUs at the RLC-Tx of the original path become duplicates by the PDCP retransmission and thus may be problematic if delivered later when that link is recovered. Specifically, the SNs of the remaining PDUs, if delivered again, may fall within the range of the PDCP-Rx reordering window although their associated HFN value is older than the current HFN value. As a result, the PDCP-Rx 140B may discard other new/desired PDCP PDUs with the current HFN value delivered subsequently, due to the duplicate protection or the out-of-window reception discarding.

TCP impacts in 5G blockage with fallback are described below.

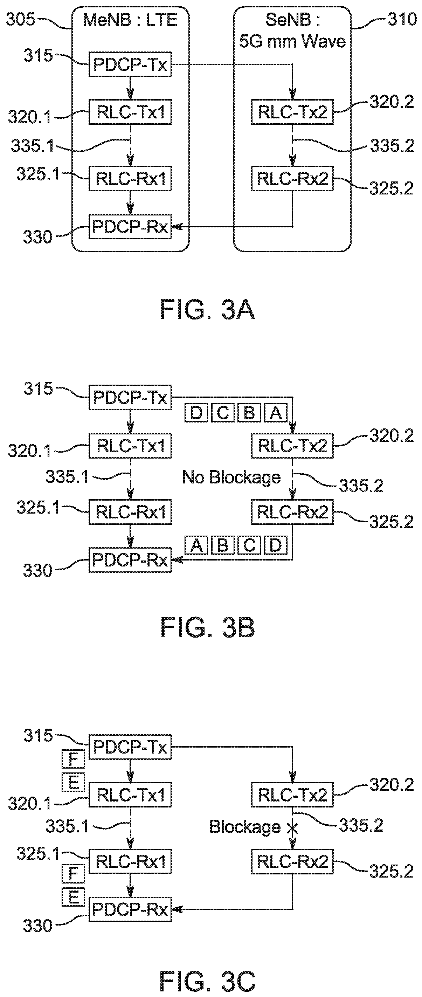

As discussed above, the Past-HFN-Duplicate Delivery problem discussed in conjunction with FIGS. 2A-2C can significantly degrade the TCP performance in the 5G framework incorporating the high frequency millimeter wave (mmWave) technology. As beamforming has been adopted as a technique to boost up the data rate, mmWave is inherently directional and thus prone to the obstructions on the line of sight, such as buildings, vehicles, human movements, and the like. This nature results in significantly degraded signal strengths during the beam blocked duration (which is termed "blockage") and may even result in loss of network connection. Due to this special mmWave channel property, a route switching mechanism (e.g., fallback to a LTE node) is useful for service continuity to UEs whenever blockage happens in 5G mmWave link. As shown in FIGS. 3A-3C, DC split bearer can be used so that UE can enjoy a high data rate through a 5G mmWave node (e.g., SeNB) while using a slower LTE node (e.g., MeNB) as a back-up link for service continuity when the 5G mmWave link suffers from the blockage.

FIGS. 3A-3C illustrate example DC split bearers for 5G mmWave and Long Term Evolution (LTE) nodes, in accordance with some embodiments. The implementations of FIGS. 3A-3C, as shown in FIG. 3A, include a LTE MeNB 305 and a 5G mmWave SeNB 310. A PDCP-Tx 315 is connected with a PDCP-Rx 330 via a first RLC link 335.1, through the MeNB 305, which includes RLC-Tx1 320.1 and RLC-Rx1 325.1, and via a second RLC link 335.2, through the SeNB 310, which includes RLC-Tx2 320.2 and RLC-Rx1 325.2.

In one example implementation with FIGS. 3A-3C, the 5G mmWave data rate is 5Gbps, while LTE data rate is 1Gbps. In most cases, the 5G mmWave data rate of the SeNB 310 is greater than the LTE data rate of the MeNB 305.

As shown in FIG. 3B, when there is no blockage in RLC link 335.2, the PDUs A, B, C, and D transmitted from PDCP-Tx 315 are delivered to PDCP-Rx 330 via RLC link 335.2. In FIG. 3C, blockage occurs in RLC link 335.2 between RLC-Tx2 320.2 and RLC-Rx2 325.2. As a result of the blockage, PDUs E and F are transmitted via RLC link 335.1 rather than the blocked RLC link 335.2.

In accordance with some embodiments of the subject technology, the UE decodes a configuration, provided from the network via RRC (radio resource control) signaling, for identifying a RLC-Rx (radio link control receive) link source of packets. The UE decodes, for storage in a memory of the UE, a packet at a first RLC-Rx link (e.g., associated with the MeNB). The UE decodes, for storage in the memory of the UE, a packet at a second RLC-Rx link (e.g., associated with the SeNB). The first RLC-Rx link may correspond to RLC-Rx1 325.1 and the second RLC-Rx link may correspond to RLC-Rx2 325.2. The UE distinguishes, in a PDCP (packet data convergence protocol) entity, the packet decoded at the first RLC-Rx link from the packet decoded at the second RLC-Rx link, based on the configuration and SNs (sequence numbers) of the packets. The UE decodes a distinct packet in the PDCP entity based on distinguishing the packet decoded at the first RLC-Rx link from the packet decoded at the second RLC-Rx link.

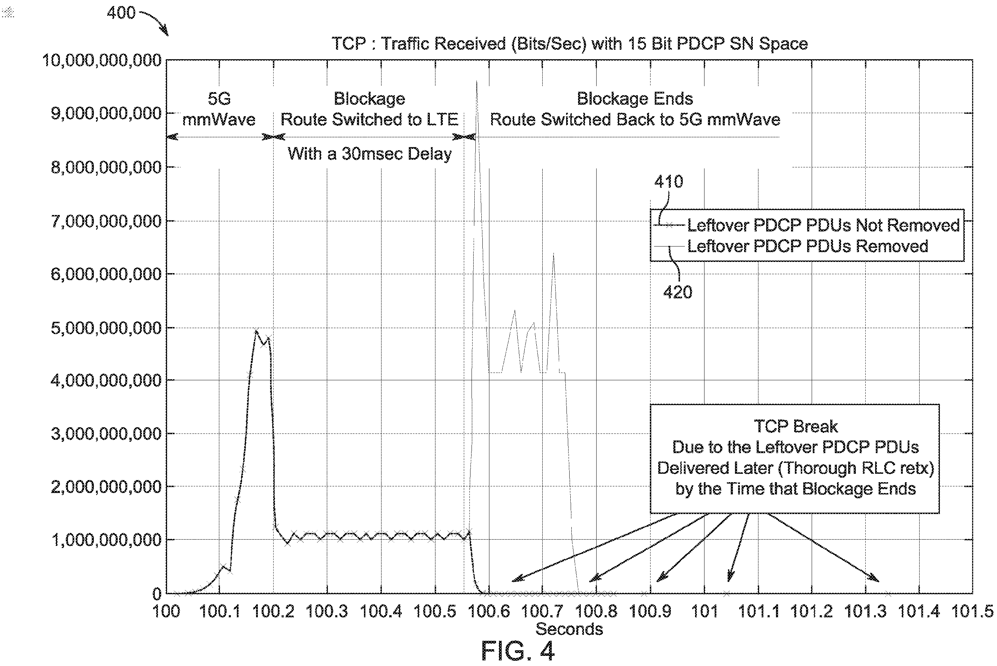

FIG. 4 is a graph 400 illustrating an example TCP throughput performance comparison, in accordance with some embodiments.

In the example simulation of FIG. 4, the 5G mmWave data rate is 5Gbps, while LTE data rate is 1Gbps. Over the course of the simulation, a File Transfer Protocol (FTP) file of 200MB is downloaded from a FTP server via a split bearer (through MeNB/SeNB) to the UE. The transfer starts at 100.0 sec, where the route is first chosen to the 5G mmWave link (SeNB). The blockage starts at 100.2 sec, with the duration of 0.35 sec and the 5% ramp time. The blockage is detected at 100.23 sec (with a 30 msec delay), and then the route switched to the LTE link (MeNB) for service continuity. When the blockage ends, the route is switched back to the 5G mmWave link (MeNB). During the blockage duration (except the 5% ramp time), packets are dropped most of the time. The 15-bit PDCP SN space was used as it is a typical SN space used for UEs supporting split bearers. In this setting, the end-to-end TCP throughput performance is investigated.

Curve 410 shows that before the blockage happens, TCP ramps up to 5Gbps through 5G mmWave link (SeNB), and facing blockage from 100.2 sec, it drops to 1Gbps as we fallback to LTE (MeNB) with PDCP retransmissions. However, around the blockage ending time (100.55 sec), the simulations shows that TCP almost breaks down.

Specifically, there are PDCP PDUs remained at 5G RLC when falling back to LTE, which become duplicates as PDCP resends them through LTE. Some of the remained PDCP PDUs at 5G RLC are occasionally delivered (by mapped to a RLC PDU) during blockage due to 5G RLC AM retransmissions (note that packets are not completely dropped during blockage). Toward the blockage end, the signal quality of the 5G mmWave link returns back to normal. As a result, most of the remaining PDCP PDU duplicates are delivered in a very fast rate by 5G RLC AM retransmission around the blockage ending time. From this simulation, it is noted that these remaining PDCP PDUs, most of which are delivered toward the blockage end, cause the Past HFN Duplicate Delivery problem to the desired PDCP PDUs (new/in-sequence TCP packets) delivered through the LTE link right before switching back to 5G mmWave link. It is noted that the amount of the PDCP PDUs duplicates (and the resulting loss of the new/in-sequence PDCP PDUs due to the duplicate protection or the out-of-window reception discarding by PDCP reordering function) is large, due to the high data rate of the 5G mmWave link (SeNB). This causes the stalled TCP performance afterward, even though the route is switched back to the 5G mmWave link (after the blockage ends at 100.55sec), which has a high data rate of 5Gbps.

FIG. 4 also illustrates curve 420, representing the performance when the problematic remaining PDCP PDUs are manually removed when falling back to LTE. It is to be noted that there is no TCP throughput degradation after the blockage is over. TCP ramps up to the original 5Gbps data rate when switching back to the 5G mmWave link (from the LTE 1Gbps data rate) without any slowdown. The spike when switching back to 5G is due to the PDCP retransmission of the large number of piled-up PDCP PDUs (caused by data rate differences) while on the slower LTE link. For the curve 420, the TCP session finishes the 200MB transfer within 0.76 sec after the download start time.

Regarding the described Past HFN Duplicate Delivery problem at the PDCP layer of the DC split bearer, the above demonstrates that this problem may arise in the current 5G blockage/fallback scenarios, and can impact the TCP performance. The simulation of FIG. 4 is directed to the downlink (DL) direction, but the problem also applies to the uplink (UL) direction as the UL bearer split is supported.

Note that among those remaining PDCP PDUs (or RLC SDUs), some are already mapped to RLC PDUs and in the loop of RLC retransmissions. In some implementations, when indicated from upper layer (i.e., PDCP) to discard a particular RLC SDU, the transmitting side of an AM RLC entity or the transmitting UM RLC entity discards the indicated RLC SDU if no segment of the RLC SDU has been mapped to a RLC data PDU yet.

The above implies that the timer-based discard from PDCP-Tx (one of PDCP functionalities for flow control) cannot remove the remaining PDCP PDUs at the RLC-Tx either. In other words, even if the discard timers of such PDCP PDUs are expired during the RLC link suffering, those remaining PDCP PDUs cannot be removed if already mapped to RLC PDUs.

Aspects of the subject technology may provide some mechanism to avoid the Past HFN Duplicate Delivery problem caused by the remaining PDCP PDUs, which cannot be removed by the standard RLC SDU discard procedure. Note that in 5G blockage with fallback scenario, the described Past HFN Duplicate Delivery problem does not always arise by the time that the blockage ends. The blockage may be applicable in approximately 10-30dB signal strength degradations fluctuating over time due to an obstruction on line of sight. This does not mean that packets are always dropped during the blockage. If there are some successful RLC packet deliveries (e.g. by changes on TBS, MCS, and the like at PHY/MAC layers) during blockage, then the problem may arise in the middle. Moreover, the problem does not always arise in the considered DC split bearer with blockage/fallback discussions. As the problem lies under PDCP-Rx reordering function, if the remaining PDCP PDUs (delivered later after fallback) luckily fall out of the reordering window, then those Past HFN Duplicates would be discarded anyway and would not impact the TCP performance. Finally, a falling-back network node is not limited to a LTE node. The described problem stems from the 5G blockage and the PDCP/RLC of the DC split bearer and thus can arise on any MeNB/SeNB settings of either the LTE node or the 5G node.

One basic principle of some aspects of the subject technology is to avoid the Past HFN Duplicate Delivery problem in the PDCP layer of the DC split bearer. This problem may arise in the current 5G blockage/fallback discussions and may significantly degrade the TCP performance.

In current specifications, there is no known solution that directly addresses the Past HFN Duplicate Delivery problem. One may think that a radio link failure (RLF) procedure can resolve this issue, as it involves Radio Resource Control (RRC) signaling that may re-establish RLC/MAC entities over the path suffered. But there are several issues on this procedure.

RLF detection is typically based on (a) upon T313 expiry; (b) upon a random access problem indication from MAC; and (c) upon reaching maximum RLC retransmissions. When blockage happens, unless it physically becomes out-of-sync, the RLF may be detected by reaching maximum RLC transmissions. But the timing that reaches the maximum RLC retransmission is not fixed and, in some cases, cannot be estimated. As mentioned above, blockage does not always imply the loss of network connection and thus it may not reach the maximum RLC retransmissions due to some occasional successful RLC packet deliveries during blockage. Alternatively, falling back to LTE and switching back to 5G may happen before detecting RLF (e.g. due to short blockage).

Even assuming that RLF is detected based upon reaching maximum RLC retransmissions during blockage (e.g., after falling back to LTE and before switching back to 5G), the current procedure for SCG-RLF (note that the RLC path of the 5G link is on SeNB) is to (a) suspend all SCG DRBs and SCG transmission for split DRBs; (b) reset SCG-MAC; and (c) report the failure type by RRC signaling.

One follow-up is to change SCG (PSCell may be released/ added), which involves RRC reconfigurations, random access channel (RACH) to new PSCell, and path update (bearer modification). During this path update procedure, 5G RLC Tx/Rx entities on the original path are released. The remaining PDCP PDUs are cleared up as well. However, this procedure may incur significant delay. Moreover, upon switching back, a different 5G link may be used. This may not be desirable.

Another follow-up is to resume SCG transmissions after the SCG-MAC is reset (without re-establishing RLC). This involves RRC reconfigurations. Then, since the remaining PDCP PDUs still remain on the 5G RLC-Tx, the subsequent Buffer Status Report (BSR) triggering and Scheduling Request (SR) may follow on the reset SCG-MAC. Thus the problem may still persist.

In sum, the RLF procedure is either overly complicated or not sufficient to resolve the Past HFN Duplicate Delivery problem. As a result, some aspects of the subject technology are directed to several solutions that can directly address this problem.

According to a first embodiment, the PDCP SN space and COUNT lengths are increased.

One primitive way to avoid the phenomenon described above is to use the larger PDCP SN space, so that the remaining PDCP PDU duplicates (which can be delivered later by the time that blockage ends and can be troublesome) can fall out of the range of PDCP reordering window and simply be discarded. In 3GPP TS 36.323, for a Data Radio Bearer (DRB), 7bit, 12bit, 15bit, and 18bit can be configured by an upper layer for the PDCP SN space. As illustrated in FIG. 4, the problem described above can happen with a 15bit PDCP SN space. As a result, one might expect that increasing PDCP SN space to, for example, 32bit (while keeping the same COUNT length of 32 bits or increasing the COUNT length from 32 bits to, for example, 64 bits) may resolve the issue.

However, the larger PDCP SN space implies larger PDCP encapsulation overhead for every single PDCP PDU transmission, which decreases the transmission efficiency. Moreover, larger size of PDCP buffer may be required for the PDCP-Tx to satisfy not more than half of the PDCP SN size in flight, and for the PDCP-Rx to perform the reordering function with the reordering window size equal to half of the PDCP SN space. Furthermore, increasing the COUNT length may complicate ciphering and integrity algorithms (e.g., where the COUNT is used as an input) and may have backward compatibility issue.

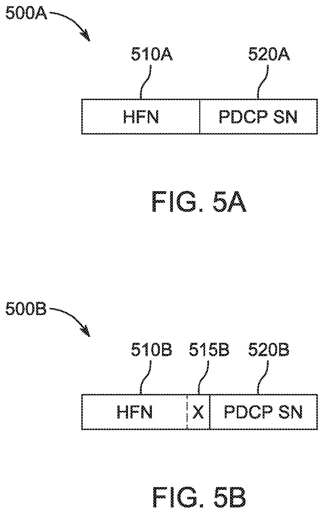

FIGS. 5A-5B illustrate example COUNT formats. In FIG. 5A, the conventional COUNT format 500A includes HFN bits 510A and PDCP SN 520A as a disjoint union of HFN and PDCP SN. The part of the HFN bits can be used for the PDCP PDU sequence numbering. In FIG. 5B, the COUNT format 500B keeps the same COUNT length as that of the COUNT format 500A from FIG. 5A. However, a part called X 515B of the HFN bits 510B can be involved into the PDCP SN bits 520B.

For example, using the configured 15bit PDCP SN space for a split DRB, we can use the extended SN version by augmenting, for example, X=3 bits (as the last X=3 bits of the current HFN value) when associating a SN to a PDCP SDU. The PDCP reordering function uses the additional X=3 bits of information of the associated HFN value to determine whether the received PDCP PDU is with a past HFN value and thus needs to be discarded. With such X bits of the HFN size, the PDCP reordering can resolve the Past HFN Duplicates Delivery problem up to (2^X - 1) previous HFN (in the above example with X=3, up to 2^3 - 1 = 7 previous HFN). The additional PDCP encapsulation overhead is controlled by the X bits, which are configured by RRC, while minimizing the impact on the other PDCP functionalities. This can help both the transmitting and receiving PDCP entities to maintain the COUNT security protection without worrying that the transmitting PDCP entity would not send more than half of the PDCP SN space in flight (which may vary in different implementations).

The key to address the Past HFN Duplicates Delivery problem is to remove, when a route switches, the remaining PDCP PDUs at the RLC-Tx of the original path. However, the above embodiments just let them be delivered later and discarded by the PDCP-Rx reordering function, without removing them in advance. As a result, there is always a possibility that the problem can still persist, for example, in a split bearer with longer blockage duration and higher data rate paths (e.g., 100+Gbps).

Since RLC AM mode is used for the split bearer, if the remaining PDCP PDUs are removed at the RLC-Tx entity of the original path, then the corresponding RLC-Rx entity on the other end has to be initialized. Otherwise, it waits indefinitely with the previously operated state variables, SN, and the like. Therefore, aspects of the subject technology re-establish both the RLC-Tx/Rx entities of the original path when a route switches to remove those PDCP PDUs at the RLC-Tx entity.

A third embodiment provides a new RRC configuration and signaling to re-establish RLC. A new RRC configuration and signaling can be introduced to re-establish both RLC-Tx/Rx entities when a route switches. For example, when using the UL split bearer, when a route switches, the PDCP-Tx at the UE can be configured to notify the UE RRC. Then, the UE RRC reestablishes the RLC-Tx entity on the original path. The UE RRC then sends a message to the network RRC to re-establish the corresponding RLC-Rx entity of the original path on the network side. Symmetrically. for the DL split bearer, the new RRC signaling can be used to re-establish the corresponding RLC-Rx entity of the original path on the UE side.

A fourth embodiment provides a new PDCP control to re-establish the associated RLC. The procedure is similar to that of the third embodiment, but without involving RRC. In fact, routing (over two RLC paths) is performed by the PDCP-Tx entity and thus re-establishing RLC can be configured to be transparent to RRC when switching route. Without involving RRC to re-establish the RLC entity, a new PDCP indication to RLC and a new PDCP Control PDU may be introduced. Specifically, when using the UL split bearer, the PDCP-Tx at the UE can send an indication to the RLC-Tx entity of the original path to be re-established. The PDCP-Tx can then use a PDCP Control PDU with a different PDU type bits other than those shown in Table 1, and send the PDCP Control PDU as the first PDCP PDU for the transmission over the switched route to notify the PDCP-Rx entity on the network side to send an indication to re-establish the corresponding RLC-Rx entity of the original path.

**Table 1. PDCP PDU Type**

| **Bit** | **Description** |
|---|---|
| 000 | PDCP status report |
| 001 | Interspersed ROHC feedback packet |
| 010 | LWA status report |
| 011-111 | Reserved |

Regarding the fourth embodiment, instead of using the PDCP Control PDU to notify the other end to re-establish the RLC entity, a new RLC Control PDU may be used. For example, while using the UL split bearer, when the RLC-Tx entity of the original path receives the re-establishing indication from the PDCP-Tx at UE, it can use a RLC Control PDU with a different Control PDU Type (CPT) field other than that shown in Table 2, and send it as the first RLC PDU for the transmission after re-establishment. When the corresponding RLC-Rx entity receives this new RLC Control PDU by the time that blockage ends, it may re-establish itself as well.

**Table 2. RLC CPT Field Interpretation**

| **Value** | **Description** |
|---|---|
| 000 | STATUS PDU |
| 001-111 | Reserved (PDUs with this coding are discarded by the receiving entity for this release of the protocol) |

Regarding the third and fourth embodiments above, when the RLC-Rx entity is to be re-established by either new RRC signaling, a new PDCP indication or a new RLC Control PDU, the RLC-Rx entity may be configured to re-assemble RLC SDUs (or PDCP PDUs) and to send them to the PDCP-Rx entity before being re-established.

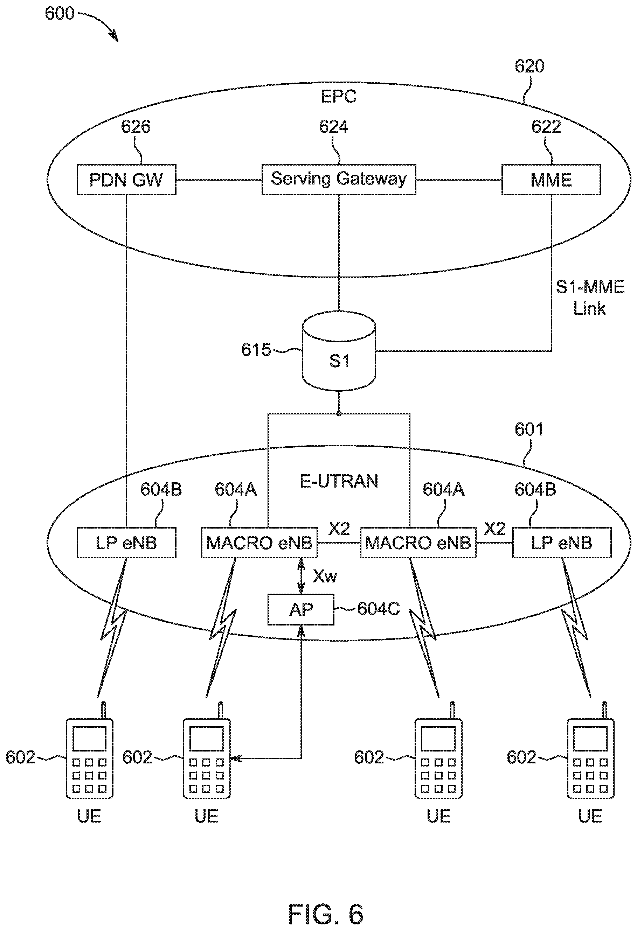

FIG. 6 shows an example of a portion of an end-to-end network architecture of a Long Term Evolution (LTE) network with various components of the network in accordance with some embodiments. As used herein, an LTE network refers to both LTE and LTE Advanced (LTE-A) networks as well as other versions of LTE networks to be developed. The network 600 may comprise a radio access network (RAN) (e.g., as depicted, the E-UTRAN or evolved universal terrestrial radio access network) 601 and core network 620 (e.g., shown as an evolved packet core (EPC)) coupled together through an S1 interface 615. For convenience and brevity, only a portion of the core network 620, as well as the RAN 601, is shown in the example.

The core network 620 may include a mobility management entity (MME) 622, serving gateway (serving GW) 624, and packet data network gateway (PDN GW) 626. The RAN 601 may include evolved NodeBs (eNBs) 604 (which may operate as base stations) for communicating with user equipment (UE) 602. The eNBs 604 may include macro eNBs 604a and low power (LP) eNBs 604b. The UEs 602 may correspond to any of the UEs 120A, 125A, and 130B of FIGS. 1A-1B.

The MME 622 may be similar in function to the control plane of legacy Serving GPRS Support Nodes (SGSN). The MME 622 may manage mobility aspects in access such as gateway selection and tracking area list management. The serving GW 624 may terminate the interface toward the RAN 601, and route data packets between the RAN 601 and the core network 620. In addition, the serving GW 624 may be a local mobility anchor point for inter-eNB handovers and also may provide an anchor for inter-3GPP mobility. Other responsibilities may include lawful intercept, charging, and some policy enforcement. The serving GW 624 and the MME 622 may be implemented in one physical node or separate physical nodes.

The PDN GW 626 may terminate a SGi interface toward the packet data network (PDN). The PDN GW 626 may route data packets between the EPC 620 and the external PDN, and may perform policy enforcement and charging data collection. The PDN GW 626 may also provide an anchor point for mobility devices with non-LTE access. The external PDN can be any kind of IP network, as well as an IP Multimedia Subsystem (IMS) domain. The PDN GW 626 and the serving GW 624 may be implemented in a single physical node or separate physical nodes.

The eNBs 604 (macro and micro) may terminate the air interface protocol and may be the first point of contact for a UE 602. In some embodiments, an eNB 604 may fulfill various logical functions for the RAN 601 including, but not limited to, RNC (radio network controller functions) such as radio bearer management, uplink and downlink dynamic radio resource management and data packet scheduling, and mobility management. In accordance with embodiments, UEs 602 may be configured to communicate orthogonal frequency division multiplexed (OFDM) communication signals with an eNB 604 over a multicarrier communication channel in accordance with an OFDMA communication technique. The OFDM signals may comprise a plurality of orthogonal subcarriers.

The S1 interface 615 may be the interface that separates the RAN 601 and the EPC 620. It may be split into two parts: the S1-U, which may carry traffic data between the eNBs 604 and the serving GW 624, and the S1-MME, which may be a signaling interface between the eNBs 604 and the MME 622. The X2 interface may be the interface between eNBs 604. The X2 interface may comprise two parts, the X2-C and X2-U. The X2-C may be the control plane interface between the eNBs 604, while the X2-U may be the user plane interface between the eNBs 604.

With cellular networks, LP cells 604b may be typically used to extend coverage to indoor areas where outdoor signals do not reach well, or to add network capacity in areas with dense usage. In particular, it may be desirable to enhance the coverage of a wireless communication system using cells of different sizes, macrocells, microcells, picocells, and femtocells, to boost system performance. The cells of different sizes may operate on the same frequency band, or may operate on different frequency bands with each cell operating in a different frequency band or only cells of different sizes operating on different frequency bands. As used herein, the term LP eNB refers to any suitable relatively LP eNB for implementing a smaller cell (smaller than a macro cell) such as a femtocell, a picocell, or a microcell. Femtocell eNBs may be typically provided by a mobile network operator to its residential or enterprise customers. A femtocell may be typically the size of a residential gateway or smaller and generally connect to a broadband line. The femtocell may connect to the mobile operator's mobile network and provide extra coverage in a range of typically 30 to 60 meters. Thus, a LP eNB 604b might be a femtocell eNB since it is coupled through the PDN GW 626. Similarly, a picocell may be a wireless communication system typically covering a small area, such as in-building (offices, shopping malls, train stations, etc.), or more recently in-aircraft. A picocell eNB may generally connect through the X2 link to another eNB such as a macro eNB through its base station controller (BSC) functionality. Thus, LP eNB may be implemented with a picocell eNB since it may be coupled to a macro eNB 604a via an X2 interface. Picocell eNBs or other LP eNBs LP eNB 604b may incorporate some or all functionality of a macro eNB LP eNB 604a. In some cases, this may be referred to as an access point base station or enterprise femtocell.

In some embodiments, the UE 602 may communicate with an access point (AP) 604c. The AP 604c may use only the unlicensed spectrum (e.g., WiFi bands) to communicate with the UE 602. The AP 604c may communicate with the macro eNB 604A (or LP eNB 604B) through an Xw interface. In some embodiments, the AP 604c may communicate with the UE 602 independent of communication between the UE 602 and the macro eNB 604A. In other embodiments, the AP 604c may be controlled by the macro eNB 604A and use LWA, as described in more detail below.

Communication over an LTE network may be split up into 8ms frames, each of which may contain ten 1ms subframes. Each subframe of the frame, in turn, may contain two slots of 0.5ms. Each subframe may be used for uplink (UL) communications from the UE to the eNB or downlink (DL) communications from the eNB to the UE. In one embodiment, the eNB may allocate a greater number of DL. communications than UL communications in a particular frame. The eNB may schedule transmissions over a variety of frequency bands (f₁ and f₂). The allocation of resources in subframes used in one frequency band and may differ from those in another frequency band. Each slot of the subframe may contain 7-7 OFDM symbols, depending on the system used. In one embodiment, the subframe may contain 12 subcarriers. A downlink resource grid may be used for downlink transmissions from an eNB to a UE, while an uplink resource grid may be used for uplink transmissions from a UE to an eNB or from a UE to another UE. The resource grid may be a time-frequency grid, which is the physical resource in the downlink in each slot. The smallest time-frequency unit in a resource grid may be denoted as a resource element (RE). Each column and each row of the resource grid may correspond to one OFDM symbol and one OFDM subcarrier, respectively. The resource grid may contain resource blocks (RBs) that describe the mapping of physical channels to resource elements and physical RBs (PRBs). A PRB may be the smallest unit of resources that can be allocated to a UE. A resource block may be 180 kHz wide in frequency and 1 slot long in time. In frequency, resource blocks may be either 12 x 15 kHz subcarriers or 24 x 8.5 kHz subcarriers wide. For most channels and signals, 12 subcarriers may be used per resource block, dependent on the system bandwidth. In Frequency Division Duplexed (FDD) mode, both the uplink and downlink frames may be 8ms and frequency (full-duplex) or time (half-duplex) separated. In Time Division Duplexed (TDD), the uplink and downlink subframes may be transmitted on the same frequency and are multiplexed in the time domain. The duration of the resource grid 400 in the time domain corresponds to one subframe or two resource blocks. Each resource grid may comprise 12 (subcarriers) *14 (symbols) =168 resource elements.

Each OFDM symbol may contain a cyclic prefix (CP) which may be used to effectively eliminate Inter Symbol Interference (ISI), and a Fast Fourier Transform (FFT) period. The duration of the CP may be determined by the highest anticipated degree of delay spread. Although distortion from the preceding OFDM symbol may exist within the CP, with a CP of sufficient duration, preceding OFDM symbols do not enter the FFT period. Once the FFT period signal is received and digitized, the receiver may ignore the signal in the CP.

There may be several different physical downlink channels that are conveyed using such resource blocks, including the physical downlink control channel (PDCCH) and the physical downlink shared channel (PDSCH). Each subframe may be partitioned into the PDCCH and the PDSCH. The PDCCH may normally occupy the first two symbols of each subframe and carries, among other things, information about the transport format and resource allocations related to the PDSCH channel, as well as H-ARQ information related to the uplink shared channel. The PDSCH may carry user data and higher layer signaling to a UE and occupy the remainder of the subframe. Typically, downlink scheduling (assigning control and shared channel resource blocks to UEs within a cell) may be performed at the eNB based on channel quality information provided from the UEs to the eNB, and then the downlink resource assignment information may be sent to each UE on the PDCCH used for (assigned to) the UE. The PDCCH may contain downlink control information (DCI) in one of a number of formats that indicate to the UE how to find and decode data, transmitted on PDSCH in the same subframe, from the resource grid. The DCI format may provide details such as number of resource blocks, resource allocation type, modulation scheme, transport block, redundancy version, coding rate etc. Each DCI format may have a cyclic redundancy code (CRC) and be scrambled with a Radio Network Temporary Identifier (RNTI) that identifies the target UE for which the PDSCH is intended. Use of the UE-specific RNTI may limit decoding of the DCI format (and hence the corresponding PDSCH) to only the intended UE.

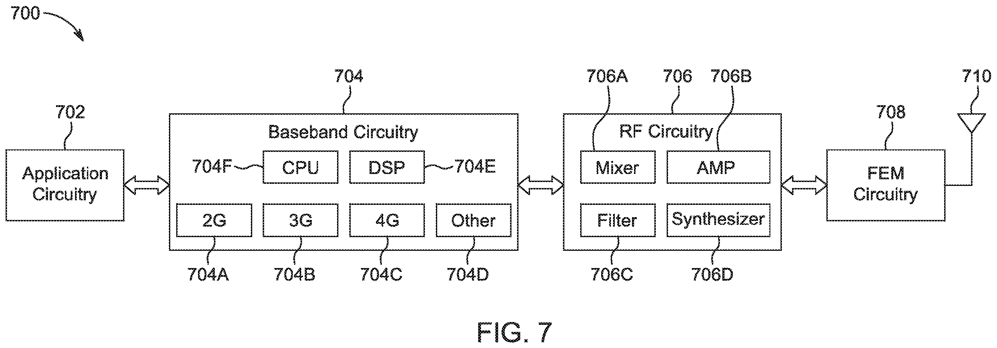

Embodiments described herein may be implemented into a system using any suitably configured hardware and/or software. FIG. 7 illustrates components of a UE in accordance with some embodiments. At least some of the components shown may be used in an eNB or MME, for example, such as the UE 602 or eNB 604 shown in FIG. 6. The UE 700 and other components may be configured to use the synchronization signals as described herein. The UE 700 may be one of the UEs 702 shown in FIG. 1 and may be a stationary, non-mobile device or may be a mobile device. In some embodiments, the UE 700 may include application circuitry 702, baseband circuitry 704, Radio Frequency (RF) circuitry 706, front-end module (FEM) circuitry 708 and one or more antennas 710, coupled together at least as shown. At least some of the baseband circuitry 704, RF circuitry 706, and FEM circuitry 708 may form a transceiver. In some embodiments, other network elements, such as the eNB may contain some or all of the components shown in FIG. 7. Other of the network elements, such as the MME, may contain an interface, such as the S1 interface, to communicate with the eNB over a wired connection regarding the UE.

The application or processing circuitry 702 may include one or more application processors. For example, the application circuitry 702 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 704 may include circuitry such as, but not limited to, one or more single-core or multi-core processors. The baseband circuitry 704 may include one or more baseband processors and/or control logic to process baseband signals received from a receive signal path of the RF circuitry 706 and to generate baseband signals for a transmit signal path of the RF circuitry 706. Baseband processing circuity 704 may interface with the application circuitry 702 for generation and processing of the baseband signals and for controlling operations of the RF circuitry 706. For example, in some embodiments, the baseband circuitry 704 may include a second generation (2G) baseband processor 704a, third generation (3G) baseband processor 704b, fourth generation (4G) baseband processor 704c, and/or other baseband processor(s) 704d for other existing generations, generations in development or to be developed in the future (e.g., fifth generation (5G), 7G, etc.). The baseband circuitry 704 (e.g., one or more of baseband processors 704a-d) may handle various radio control functions that enable communication with one or more radio networks via the RF circuitry 706. The radio control functions may include, but are not limited to, signal modulation/demodulation, encoding/decoding, radio frequency shifting, etc. In some embodiments, modulation/demodulation circuitry of the baseband circuitry 704 may include FFT, precoding, and/or constellation mapping/demapping functionality. In some embodiments, encoding/decoding circuitry of the baseband circuitry 704 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 704 may include elements of a protocol stack such as, for example, elements of an evolved universal terrestrial radio access network (E-UTRAN) protocol including, for example, physical (PHY), media access control (MAC), radio link control (RLC), packet data convergence protocol (PDCP), and/or radio resource control (RRC) elements. A central processing unit (CPU) 704e of the baseband circuitry 704 may be configured to run elements of the protocol stack for signaling of the PHY, MAC, RLC, PDCP and/or RRC layers. In some embodiments, the baseband circuitry may include one or more audio digital signal processor(s) (DSP) 704f. The audio DSP(s) 704f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 704 and the application circuitry 702 may be implemented together such as, for example, on a system on a chip (SOC).

In some embodiments, the baseband circuitry 704 may provide for communication compatible with one or more radio technologies. For example, in some embodiments, the baseband circuitry 704 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 704 is configured to support radio communications of more than one wireless protocol may be referred to as multi-mode baseband circuitry. In some embodiments, the device can be configured to operate in accordance with communication standards or other protocols or standards, including Institute of Electrical and Electronic Engineers (IEEE) 602.16 wireless technology (WiMax), IEEE 602.11 wireless technology (WiFi) including IEEE 602.11 ad, which operates in the 70 GHz millimeter wave spectrum, various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 6G, etc. technologies either already developed or to be developed.

RF circuitry 706 may enable communication with wireless networks using modulated electromagnetic radiation through a non-solid medium. In various embodiments, the RF circuitry 706 may include switches, filters, amplifiers, etc. to facilitate the communication with the wireless network. RF circuitry 706 may include a receive signal path which may include circuitry to down-convert RF signals received from the FEM circuitry 708 and provide baseband signals to the baseband circuitry 704. RF circuitry 706 may also include a transmit signal path which may include circuitry to up-convert baseband signals provided by the baseband circuitry 704 and provide RF output signals to the FEM circuitry 708 for transmission.

In some embodiments, the RF circuitry 706 may include a receive signal path and a transmit signal path. The receive signal path of the RF circuitry 706 may include mixer circuitry 706a, amplifier circuitry 706b and filter circuitry 706c. The transmit signal path of the RF circuitry 706 may include filter circuitry 706c and mixer circuitry 706a. RF circuitry 706 may also include synthesizer circuitry 706d for synthesizing a frequency for use by the mixer circuitry 706a of the receive signal path and the transmit signal path. In some embodiments, the mixer circuitry 706a of the receive signal path may be configured to down-convert RF signals received from the FEM circuitry 708 based on the synthesized frequency provided by synthesizer circuitry 706d. The amplifier circuitry 706b may be configured to amplify the down-converted signals and the filter circuitry 706c may be a low-pass filter (LPF) or band-pass filter (BPF) configured to remove unwanted signals from the down-converted signals to generate output baseband signals. Output baseband signals may be provided to the baseband circuitry 704 for further processing. In some embodiments, the output baseband signals may be zero-frequency baseband signals, although this is not a requirement. In some embodiments, mixer circuitry 706a of the receive signal path may comprise passive mixers, although the scope of the embodiments is not limited in this respect.

In some embodiments, the mixer circuitry 706a of the transmit signal path may be configured to up-convert input baseband signals based on the synthesized frequency provided by the synthesizer circuitry 706d to generate RF output signals for the FEM circuitry 708. The baseband signals may be provided by the baseband circuitry 704 and may be filtered by filter circuitry 706c. The filter circuitry 706c may include a low-pass filter (LPF), although the scope of the embodiments is not limited in this respect.

In some embodiments, the mixer circuitry 706a of the receive signal path and the mixer circuitry 706a of the transmit signal path may include two or more mixers and may be arranged for quadrature downconversion and/or upconversion respectively. In some embodiments, the mixer circuitry 706a of the receive signal path and the mixer circuitry 706a of the transmit signal path may include two or more mixers and may be arranged for image rejection (e.g., Hartley image rejection). In some embodiments, the mixer circuitry 706a of the receive signal path and the mixer circuitry 706a may be arranged for direct downconversion and/or direct upconversion, respectively. In some embodiments, the mixer circuitry 706a of the receive signal path and the mixer circuitry 706a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 706 may include analog-to-digital converter (ADC) and digital-to-analog converter (DAC) circuitry and the baseband circuitry 704 may include a digital baseband interface to communicate with the RF circuitry 706.

In some dual-mode embodiments, a separate radio IC circuitry may be provided for processing signals for each spectrum, although the scope of the embodiments is not limited in this respect.

In some embodiments, the synthesizer circuitry 706d may be a fractional-N synthesizer or a fractional N/N+1 synthesizer, although the scope of the embodiments is not limited in this respect as other types of frequency synthesizers may be suitable. For example, synthesizer circuitry 706d may be a delta-sigma synthesizer, a frequency multiplier, or a synthesizer comprising a phase-locked loop with a frequency divider.

The synthesizer circuitry 706d may be configured to synthesize an output frequency for use by the mixer circuitry 706a of the RF circuitry 706 based on a frequency input and a divider control input. In some embodiments, the synthesizer circuitry 706d may be a fractional N/N+1 synthesizer.

In some embodiments, frequency input may be provided by a voltage controlled oscillator (VCO), although that is not a requirement. Divider control input may be provided by either the baseband circuitry 704 or the applications processor 702 depending on the desired output frequency. In some embodiments, a divider control input (e.g., N) may be determined from a look-up table based on a channel indicated by the applications processor 702.

Synthesizer circuitry 706d of the RF circuitry 706 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 706d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 706 may include an IQ/polar converter.

FEM circuitry 708 may include a receive signal path which may include circuitry configured to operate on RF signals received from one or more antennas 710, amplify the received signals and provide the amplified versions of the received signals to the RF circuitry 706 for further processing. FEM circuitry 708 may also include a transmit signal path which may include circuitry configured to amplify signals for transmission provided by the RF circuitry 706 for transmission by one or more of the one or more antennas 710.

In some embodiments, the FEM circuitry 708 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 706). The transmit signal path of the FEM circuitry 708 may include a power amplifier (PA) to amplify input RF signals (e.g., provided by RF circuitry 706), and one or more filters to generate RF signals for subsequent transmission (e.g., by one or more of the one or more antennas 710.

In some embodiments, the UE 700 may include additional elements such as, for example, memory/storage, display, camera, sensor, and/or input/output (I/O) interface as described in more detail below. In some embodiments, the UE 700 described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or other device that may receive and/or transmit information wirelessly. In some embodiments, the UE 700 may include one or more user interfaces designed to enable user interaction with the system and/or peripheral component interfaces designed to enable peripheral component interaction with the system. For example, the UE 700 may include one or more of a keyboard, a keypad, a touchpad, a display, a sensor, a non-volatile memory port, a universal serial bus (USB) port, an audio jack, a power supply interface, one or more antennas, a graphics processor, an application processor, a speaker, a microphone, and other I/O components. The display may be an LCD or LED screen including a touch screen. The sensor may include a gyro sensor, an accelerometer, a proximity sensor, an ambient light sensor, and a positioning unit. The positioning unit may communicate with components of a positioning network, e.g., a global positioning system (GPS) satellite.

The antennas 710 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 710 may be effectively separated to take advantage of spatial diversity and the different channel characteristics that may result.

Although the UE 700 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

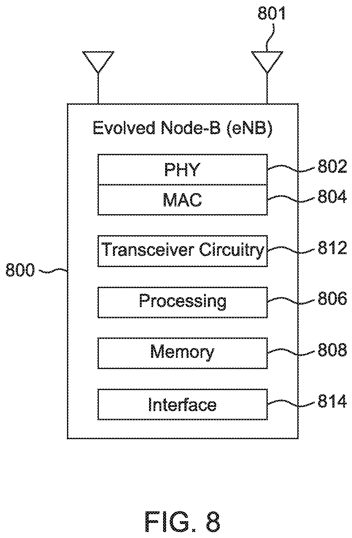

FIG. 8 is a block diagram of a communication device in accordance with some embodiments. The device may be a UE or eNB, for example, such as the UE 602 or eNB 604 shown in FIG. 6 or the MeNB 110A or SeNB 120A of FIG. 1A that may be configured to track the UE as described herein. The physical layer circuitry 802 may perform various encoding and decoding functions that may include formation of baseband signals for transmission and decoding of received signals. The communication device 800 may also include medium access control layer (MAC) circuitry 804 for controlling access to the wireless medium. The communication device 800 may also include processing circuitry 806, such as one or more single-core or multi-core processors, and memory 808 arranged to perform the operations described herein. The physical layer circuitry 802, MAC circuitry 804 and processing circuitry 806 may handle various radio control functions that enable communication with one or more radio networks compatible with one or more radio technologies. The radio control functions may include signal modulation, encoding, decoding, radio frequency shifting, etc. For example, similar to the device shown in FIG. 2, in some embodiments, communication may be enabled with one or more of a WMAN, a WLAN, and a WPAN. In some embodiments, the communication device 800 can be configured to operate in accordance with 3GPP standards or other protocols or standards, including WiMax, WiFi, WiGig, GSM, EDGE, GERAN, UMTS, UTRAN, or other 3G, 3G, 4G, 6G, etc. technologies either already developed or to be developed. The communication device 800 may include transceiver circuitry 812 to enable communication with other external devices wirelessly and interfaces 814 to enable wired communication with other external devices. As another example, the transceiver circuitry 812 may perform various transmission and reception functions such as conversion of signals between a baseband range and a Radio Frequency (RF) range.

The antennas 801 may comprise one or more directional or omnidirectional antennas, including, for example, dipole antennas, monopole antennas, patch antennas, loop antennas, microstrip antennas or other types of antennas suitable for transmission of RF signals. In some MIMO embodiments, the antennas 801 may be effectively separated to take advantage of spatial diversity and the different channel characteristics that may result.

Although the communication device 800 is illustrated as having several separate functional elements, one or more of the functional elements may be combined and may be implemented by combinations of software-configured elements, such as processing elements including DSPs, and/or other hardware elements. For example, some elements may comprise one or more microprocessors, DSPs, FPGAs, ASICs, RFICs and combinations of various hardware and logic circuitry for performing at least the functions described herein. In some embodiments, the functional elements may refer to one or more processes operating on one or more processing elements. Embodiments may be implemented in one or a combination of hardware, firmware and software. Embodiments may also be implemented as instructions stored on a computer-readable storage device, which may be read and executed by at least one processor to perform the operations described herein.

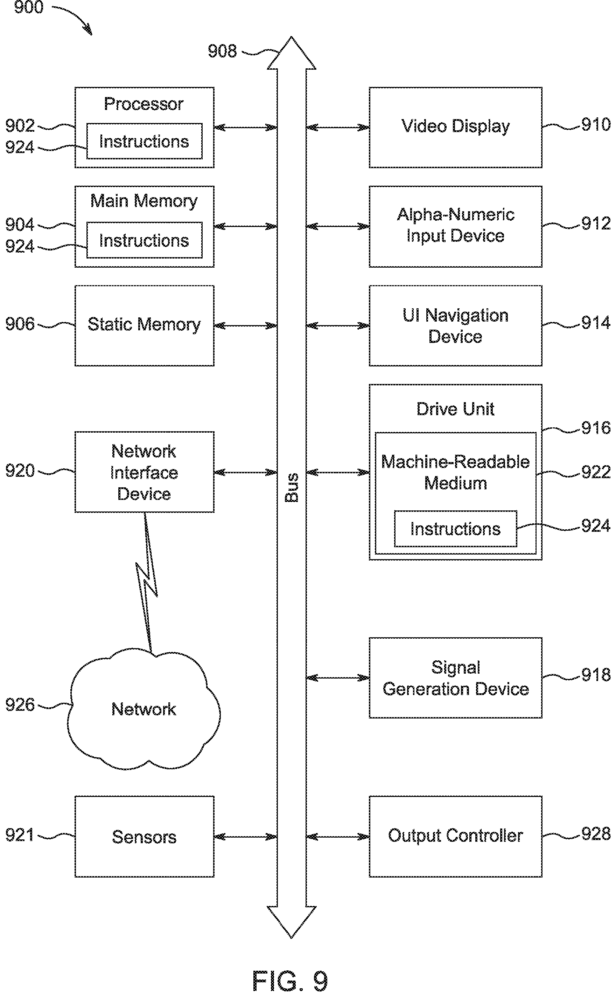

FIG. 9 illustrates another block diagram of a communication device 900 in accordance with some embodiments. The communication device 900 may correspond to the UE 602 of FIG. 6. In alternative embodiments, the communication device 900 may operate as a standalone device or may be connected (e.g., networked) to other communication devices. In a networked deployment, the communication device 900 may operate in the capacity of a server communication device, a client communication device, or both in server-client network environments. In an example, the communication device 900 may act as a peer communication device in peer-to-peer (P2P) (or other distributed) network environment. The communication device 900 may be a UE, eNB, PC, a tablet PC, a STB, a PDA, a mobile telephone, a smart phone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Communication device (e.g., computer system) 900 may include a hardware processor 902 (e.g., a central processing unit (CPU), a graphics processing unit (GPU), a hardware processor core, or any combination thereof), a main memory 904 and a static memory 906, some or all of which may communicate with each other via an interlink (e.g., bus) 908. The communication device 900 may further include a display unit 910, an alphanumeric input device 912 (e.g., a keyboard), and a user interface (UI) navigation device 914 (e.g., a mouse). In an example, the display unit 910, input device 912 and UI navigation device 914 may be a touch screen display. The communication device 900 may additionally include a storage device (e.g., drive unit) 916, a signal generation device 918 (e.g., a speaker), a network interface device 920, and one or more sensors 921, such as a global positioning system (GPS) sensor, compass, accelerometer, or other sensor. The communication device 900 may include an output controller 928, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 916 may include a communication device readable medium 922 on which is stored one or more sets of data structures or instructions 924 (e.g., software) embodying or utilized by any one or more of the techniques or functions described herein. The instructions 924 may also reside, completely or at least partially, within the main memory 904, within static memory 906, or within the hardware processor 902 during execution thereof by the communication device 900. In an example, one or any combination of the hardware processor 902, the main memory 904, the static memory 906, or the storage device 916 may constitute communication device readable media.

While the communication device readable medium 922 is illustrated as a single medium, the term "communication device readable medium" may include a single medium or multiple media (e.g., a centralized or distributed database, and/or associated caches and servers) configured to store the one or more instructions 924.

The term "communication device readable medium" may include any medium that is capable of storing, encoding, or carrying instructions for execution by the communication device 900 and that cause the communication device 900 to perform any one or more of the techniques of the present disclosure, or that is capable of storing, encoding or carrying data structures used by or associated with such instructions. Non-limiting communication device readable medium examples may include solid-state memories, and optical and magnetic media. Specific examples of communication device readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device readable media may include non-transitory communication device readable media. In some examples, communication device readable media may include communication device readable media that is not a transitory propagating signal.

The instructions 924 may further be transmitted or received over a communications network 926 using a transmission medium via the network interface device 920 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 602.11 family of standards known as Wi-Fi^{®}, IEEE 602.16 family of standards known as WiMax^{®}), IEEE 602.15.4 family of standards, a Long Term Evolution (LTE) family of standards, a Universal Mobile Telecommunications System (UMTS) family of standards, peer-to-peer (P2P) networks, among others. In an example, the network interface device 920 may include one or more physical jacks (e.g., Ethernet, coaxial, or phone jacks) or one or more antennas to connect to the communications network 926. In an example, the network interface device 920 may include a plurality of antennas to wirelessly communicate using at least one of single-input multiple-output (SIMO), MIMO, or multiple-input single-output (MISO) techniques. In some examples, the network interface device 920 may wirelessly communicate using Multiple User MIMO techniques. The term "transmission medium" shall be taken to include any intangible medium that is capable of storing, encoding or carrying instructions for execution by the communication device 900, and includes digital or analog communications signals or other intangible medium to facilitate communication of such software.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, UE, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The Abstract is provided to allow the reader to ascertain the nature and gist of the technical disclosure. It is submitted with the understanding that it will not be used to limit or interpret the scope or meaning of the claims. The following claims are hereby incorporated into the detailed description, with each claim standing on its own as a separate embodiment.

## Claims

1. A method for an apparatus for a UE, user equipment (700), the method comprising:
receiving a RRC, radio resource control, configuration, for identifying a RLC-Rx, radio link control receive, link source of packets;
decoding, for storage in a memory of the apparatus, a first packet at a first RLC-Rx link;
decoding, for storage in the memory, a second packet at a second RLC-Rx link;
determining, in a PDCP, packet data convergence protocol, entity, a first sequence number, SN, and a first hyper frame number, HFN, of the first packet decoded at the first RLC-Rx link and a second SN and a second HFN of the second packet decoded at the second RLC-Rx link, wherein the first HFN comprises one or more first HFN bits and the second HFN comprises one or more second HFN bits; and
removing, at the PDCP entity and in advance of delivery of the first and second packets to an upper layer, the second packet decoded at the second RLC-Rx link based at least in part on the second SN and at least one of one or more the second HFN bits being a duplicate of the first SN and at least one of the one or more first HFN bits;
determining, at the PDCP entity or a RRC entity, that a RLC route is to be switched between the first RLC-Rx link and the second RLC-Rx link;
notifying, using a PDCP-Tx, PDCP transmitter, that the RLC route has switched; and
reestablishing, using the RRC entity of the UE (700), a RLC entity.

2. The method of claim 1, wherein the first RLC-Rx link is associated with a MeNB, master evolved NodeB, wherein the second RLC-Rx link associated with a SeNB, secondary evolved NodeB, and wherein the method further comprises performing split bearer operation in which separate RLC paths are provided for a single PDCP transmission.

3. The method of any of claims 1-2, wherein the configuration, provided via the RRC signals, comprises an increased PDCP SN space equal to COUNT length with no HFN bits for determining whether the packets are distinct.

4. The method of any of claims 1-2, wherein the configuration, provided via the RRC signals, comprises distinguishing packets based on a part of HFN bits, and wherein the method further comprises determining, based on the part of the HFN bits and the SN, whether the packets are distinct.

5. The method of claim 1, further comprising, based on the configuration:
determining, at the PDCP entity or a RRC entity, that a RLC route is to be switched between the first RLC-Rx link and the second RLC-Rx link; and
notifying, using the RRC entity of the UE, that the RLC route has switched.

6. The method of claim 5, further comprising:
reestablishing, using the PDCP entity, a RLC entity.

7. The method of claim 1, further comprising, based on the configuration:
determining, at the PDCP entity, that a RLC route has switched between the first RLC-Rx link and the second RLC-Rx link; and
reestablishing, using a RRC entity of the UE (700), a RLC entity.

8. The method of claim 1, further comprising, based on the configuration:
determining, at the PDCP entity, that a RLC route has switched between the first RLC-Rx link and the second RLC-Rx link; and
reestablishing, using the PDCP entity, a RLC entity.

9. The method of claim 7 or 8, further comprising:
encoding for transmission, to an eNB, enhanced NodeB (800), of a RRC message for reestablishing a RLC entity at the eNB (800).

10. The method of claim 7 or 8, further comprising:
encoding for transmission, to an eNB, enhanced NodeB (800), of a PDCP control PDU, protocol data unit or a RLC control PDU for reestablishing a RLC entity at the eNB (800).

11. An apparatus for a UE, user equipment (700), the apparatus comprising:
processing circuitry (704); and memory, the processing circuitry being configured to perform the method of any of claims 1 to 10,
wherein the processing circuitry (704) comprises a baseband processor.

12. The apparatus of claim 11, further comprising transceiver circuitry (706) to receive the packet at the first RLC-Rx;
receive the packet at the second RLC-Rx;
receive the configuration.

13. A machine-readable medium storing instructions for execution by processing circuitry (704) of a UE, user equipment (700), the instructions causing the processing circuitry (704) to perform the method of any of claims 1 to 10.

## Patentansprüche

1. Verfahren für eine Vorrichtung für eine Benutzerausrüstung (user equipment), UE, (700), wobei das Verfahren umfasst:
Empfangen einer Funkressourcensteuerungs-Konfiguration, RRC-Konfiguration, zum Identifizieren einer Funkverbindungssteuerungs-Empfangsverbindungsquelle, RLC-Rx-Verbindungsquelle, von Paketen;
Decodieren, zur Speicherung in einem Speicher der Vorrichtung, eines ersten Pakets an einer ersten RLC-Rx-Verbindung;
Decodieren, zur Speicherung in dem Speicher, eines zweiten Pakets an einer zweiten RLC-Rx-Verbindung;
Bestimmen, in einer Paketdatenkonvergenzprotokoll-Entität, PDCP-Entität, einer ersten Sequenznummer, SN, und einer ersten Hyperrahmennummer, HFN, des ersten Pakets, das an der ersten RLC-Rx-Verbindung decodiert wurde, und einer zweiten SN und einer zweiten HFN des zweiten Pakets, das an der zweiten RLC-Rx-Verbindung decodiert wurde, wobei die erste HFN ein oder mehrere erste HFN-Bits umfasst und die zweite HFN ein oder mehrere zweite HFN-Bits umfasst; und
Entfernen, an der PDCP-Entität und vor der Lieferung des ersten und des zweiten Pakets an eine obere Schicht, des zweiten Pakets, das an der zweiten RLC-Rx-Verbindung decodiert wurde, zumindest teilweise basierend darauf, dass die zweite SN und mindestens eines des einen oder der mehreren zweiten HFN-Bits ein Duplikat der ersten SN und mindestens eines des einen oder der mehreren ersten HFN-Bits sind;
Bestimmen, an der PDCP-Entität oder einer RRC-Entität, dass eine RLC-Route zwischen der ersten RLC-Rx-Verbindung und der zweiten RLC-Rx-Verbindung umgeschaltet werden soll;
Benachrichtigen, unter Verwendung eines PDCP-Tx-Senders, PDCP-Senders, dass die RLC-Route umgeschaltet wurde; und
Wiederherstellen, unter Verwendung der RRC-Entität der UE (700), einer RLC-Entität.

2. Verfahren nach Anspruch 1, wobei die erste RLC-Rx-Verbindung mit einem Master Evolved NodeB, MeNB, assoziiert ist, wobei die zweite RLC-Rx-Verbindung mit einem Secondary Evolved NodeB, SeNB, assoziiert ist, und wobei das Verfahren ferner das Durchführen einer Split-Bearer-Operation umfasst, in der separate RLC-Pfade für eine einzelne PDCP-Übertragung bereitgestellt werden.

3. Verfahren nach einem der Ansprüche 1-2, wobei die Konfiguration, die über die RRC-Signale bereitgestellt wird, einen vergrößerten PDCP-SN-Raum gleich der COUNT-Länge ohne HFN-Bits zum Bestimmen, ob die Pakete verschieden sind, umfasst.

4. Verfahren nach einem der Ansprüche 1-2, wobei die Konfiguration, die über die RRC-Signale bereitgestellt wird, das Unterscheiden von Paketen basierend auf einem Teil von HFN-Bits umfasst, und wobei das Verfahren ferner das Bestimmen, basierend auf dem Teil der HFN-Bits und der SN, ob die Pakete verschieden sind, umfasst.

5. Verfahren nach Anspruch 1, ferner umfassend, basierend auf der Konfiguration:
Bestimmen, an der PDCP-Entität oder einer RRC-Entität, dass eine RLC-Route zwischen der ersten RLC-Rx-Verbindung und der zweiten RLC-Rx-Verbindung umgeschaltet werden soll; und
Benachrichtigen, unter Verwendung der RRC-Entität der UE, dass die RLC-Route umgeschaltet wurde.

6. Verfahren nach Anspruch 5, ferner umfassend:
Wiederherstellen, unter Verwendung der PDCP-Entität, einer RLC-Entität.

7. Verfahren nach Anspruch 1, ferner umfassend, basierend auf der Konfiguration:
Bestimmen, an der PDCP-Entität, dass eine RLC-Route zwischen der ersten RLC-Rx-Verbindung und der zweiten RLC-Rx-Verbindung umgeschaltet wurde; und
Wiederherstellen, unter Verwendung einer RRC-Entität der UE (700), einer RLC-Entität.

8. Verfahren nach Anspruch 1, ferner umfassend, basierend auf der Konfiguration:
Bestimmen, an der PDCP-Entität, dass eine RLC-Route zwischen der ersten RLC-Rx-Verbindung und der zweiten RLC-Rx-Verbindung umgeschaltet wurde; und
Wiederherstellen, unter Verwendung der PDCP-Entität, einer RLC-Entität.

9. Verfahren nach Anspruch 7 oder 8, ferner umfassend:
Codieren zur Übertragung, an einen Enhanced NodeB, eNB (800), einer RRC-Nachricht zum Wiederherstellen einer RLC-Entität am eNB (800).

10. Verfahren nach Anspruch 7 oder 8, ferner umfassend:
Codieren zur Übertragung, an einen Enhanced NodeB, eNB (800), einer Protokolldateneinheit, PDCP-Steuerungs-PDU, oder einer RLC-Steuerungs-PDU zum Wiederherstellen einer RLC-Entität am eNB (800).

11. Vorrichtung für eine Benutzerausrüstung, UE, (700), wobei die Vorrichtung umfasst:
eine Verarbeitungsschaltung (704); und einen Speicher, wobei die Verarbeitungsschaltung konfiguriert ist, um das Verfahren nach einem der Ansprüche 1 bis 10 durchzuführen,
wobei die Verarbeitungsschaltung (704) einen Basisbandprozessor umfasst.

12. Vorrichtung nach Anspruch 11, ferner umfassend eine Transceiver-Schaltung (706) zum
Empfangen des Pakets an der ersten RLC-Rx;
Empfangen des Pakets an der zweiten RLC-Rx;
Empfangen der Konfiguration.

13. Maschinenlesbares Medium, das Anweisungen zur Ausführung durch eine Verarbeitungsschaltung (704) einer Benutzerausrüstung, UE, (700) speichert, wobei die Anweisungen die Verarbeitungsschaltung (704) veranlassen, das Verfahren nach einem der Ansprüche 1 bis 10 durchzuführen.

## Revendications

1. Un procédé destiné à un appareil pour un équipement utilisateur, UE (700), le procédé comprenant :
la réception d'une configuration de contrôle de ressource radio, RRC, pour identifier une source de paquets de liaison de réception de contrôle de liaison radio, RLC-Rx ;
le décodage, pour stockage dans une mémoire de l'appareil, d'un premier paquet au niveau d'une première liaison RLC-Rx ;
le décodage, pour stockage dans la mémoire, d'un second paquet au niveau d'une seconde liaison RLC-Rx ;
la détermination, dans une entité de protocole de convergence de données par paquets, PDCP, d'un premier numéro de séquence, SN, et d'un premier numéro d'hypertrame, HFN, du premier paquet décodé au niveau de la première liaison RLC-Rx et d'un second SN et d'un second HFN du second paquet décodé au niveau de la seconde liaison RLC-Rx, dans lequel le premier HFN comprend un ou plusieurs premiers bits HFN et le second HFN comprend un ou plusieurs seconds bits HFN ; et
la suppression, au niveau de l'entité PDCP et préalablement à la délivrance des premier et second paquets à une couche supérieure, du second paquet décodé au niveau de la seconde liaison RLC-Rx sur la base au moins en partie du second SN et d'au moins un des un ou plusieurs seconds bits HFN qui est un duplicata du premier SN et d'au moins un des un ou plusieurs premiers bits HFN ;
la détermination, au niveau de l'entité PDCP ou d'une entité RRC, qu'un routage RLC doit être commuté entre la première liaison RLC-Rx et la seconde liaison RLC-Rx ;
la notification, en utilisant un émetteur PDCP, PDCP-Tx, que le routage RLC a commuté ; et
le rétablissement, en utilisant l'entité RRC de l'UE (700), d'une entité RLC.

2. Le procédé selon la revendication 1, dans lequel la première liaison RLC-Rx est associée à un nœud B évolué maître, MeNB, dans lequel la seconde liaison RLC-Rx est associée à un nœud B évolué secondaire, SeNB, et dans lequel le procédé comprend en outre la réalisation d'une opération de support divisé dans laquelle des chemins RLC distincts sont prévus pour une unique transmission PDCP.

3. Le procédé selon l'une des revendications 1 à 2, dans lequel la configuration, délivrée via les signaux RRC, comprend un espace SN PDCP augmenté égal à la longueur COUNT sans bits HFN pour déterminer si les paquets sont distincts.

4. Le procédé selon l'une des revendications 1 à 2, dans lequel la configuration, délivrée via les signaux RRC, comprend la distinction de paquets sur la base d'une partie de bits HFN, et dans lequel le procédé comprend en outre la détermination, sur la base de la partie des bits HFN et du SN, si les paquets sont distincts.

5. Le procédé selon la revendication 1, comprenant en outre, sur la base de la configuration :
la détermination, au niveau de l'entité PDCP ou d'une entité RRC, qu'un routage RLC doit être commuté entre la première liaison RLC-Rx et la seconde liaison RLC-Rx ; et
la notification, en utilisant l'entité RRC de l'UE, que le routage RLC a commuté.

6. Le procédé selon la revendication 5, comprenant en outre :
le rétablissement, en utilisant l'entité PDCP, d'une entité RLC.

7. Le procédé selon la revendication 1, comprenant en outre, sur la base de la configuration :
la détermination, au niveau de l'entité PDCP, qu'un routage RLC doit être commuté entre la première liaison RLC-Rx et la seconde liaison RLC-Rx ; et
le rétablissement, en utilisant une entité RRC de l'UE (700), d'une entité RLC.

8. Le procédé selon la revendication 1, comprenant en outre, sur la base de la configuration :
la détermination, au niveau de l'entité PDCP, qu'un routage RLC doit être commuté entre la première liaison RLC-Rx et la seconde liaison RLC-Rx ; et
le rétablissement, en utilisant l'entité PDCP, d'une entité RLC.

9. Le procédé selon la revendication 7 ou 8, comprenant en outre :
le codage pour la transmission, à un nœud B amélioré, eNB (800), d'un message RRC pour le rétablissement d'une entité RLC au niveau de l'eNB (800).

10. Le procédé selon la revendication 7 ou 8, comprenant en outre :
le codage pour la transmission, à un nœud B amélioré, eNB (800), d'une unité de données de protocole, PDU, de contrôle PDCP ou d'une PDU de contrôle RLC pour le rétablissement d'une entité RLC au niveau de l'eNB (800).

11. Un appareil pour un équipement utilisateur, UE (700), l'appareil comprenant :
une circuiterie de traitement (704) ; et une mémoire, la circuiterie de traitement étant configurée pour réaliser le procédé selon l'une des revendications 1 à 10,
dans lequel la circuiterie de traitement (704) comprend un processeur de bande de base.

12. Un appareil selon la revendication 11, comprenant en outre une circuiterie d'émetteur-récepteur (706) pour
recevoir le paquet au niveau de la première RLC-Rx ;
recevoir le paquet au niveau de la seconde RLC-Rx ;
recevoir la configuration.

13. Un support lisible par machine stockant des instructions pour l'exécution par une circuiterie de traitement (704) d'un équipement utilisateur, UE (700), les instructions amenant la circuiterie de traitement (704) à réaliser le procédé selon l'une des revendications 1 à 10.
